(19)

Europäisches
Patentamt
European
Patent Office
Office européen
des brevets

(11) **EP 2 414 645 B1**

(12) **EUROPEAN PATENT SPECIFICATION**

(45) Date of publication and mention
of the grant of the patent:
**17.07.2013 Bulletin 2013/29**

(51) Int Cl.:
*F01N 3/037* (2006.01)          *B01D 51/06* (2006.01)
*F01N 3/021* (2006.01)          *F01N 3/033* (2006.01)

(21) Application number: **10723346.2**

(22) Date of filing: **28.03.2010**

(86) International application number:
**PCT/IL2010/000269**

(87) International publication number:
**WO 2010/113156 (07.10.2010 Gazette 2010/40)**

(54) **EXHAUST GEOMETRY FOR PARTICLE ACCUMULATION**

ABGASGEOMETRIE ZUM AKKUMULIEREN VON PARTIKELN

GEOMETRIE D'ECHAPPEMENT POUR ACCUMULATION DE PARTICULES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.03.2009 US 164477 P**

(43) Date of publication of application:
**08.02.2012 Bulletin 2012/06**

(73) Proprietors:
• **Katoshevski, David
84965 Omer (IL)**
• **Ruzal, Michal
53465 Givaataim (IL)**
• **Sher, Eran
84299 Beer-Sheva (IL)**

(72) Inventors:
• **Katoshevski, David
84965 Omer (IL)**
• **Ruzal, Michal
53465 Givaataim (IL)**
• **Sher, Eran
84299 Beer-Sheva (IL)**

(74) Representative: **Hartig, Michael et al
Boehmert & Boehmert
Pettenkoferstrasse 20-22
80336 München (DE)**

(56) References cited:
**EP-A2- 1 072 765      WO-A2-2007/101246
US-B1- 6 447 574**

**Description**

RELATED APPLICATION

The present application claims the benefit of US provisional application 61/164,477 filed on March 30, 2009.

FIELD OF THE INVENTION

The present invention relates to clustering of small particles and more particularly to grouping of submicron particles in a pipe having a standing wave like geometry.

BACKGROUND AND PRIOR ART

There is a major health and environmental concern regarding emitted particles from vehicle exhaust pipes, in particularly from Diesel engines. Particles, having a size ranging from nanometers to micrometers (herein after referred to as "submicron particles"), impose risk to the health and to the environment. Since the submicron particles are small in size, it is easier for the submicron particles to penetrate the respiratory system. Furthermore, the stay time of smaller size particles in the air is much longer. For example, a particle of 0.1 micron will stay about 100 times longer in the air than a particle of 1 micron. Hence, submicron particles impose a two-fold risk: (a) longer exposure and (b) easier penetration to the lungs. This risk is described in numerous academic papers as well as in the US-EPA website. Emitted particles also harm vegetation and even the surface of buildings and monuments. The term "inhaleable particles" is used herein interchangeably with the term "submicron particles".

Hence, increasing a particle's size at the expense of reducing the number of submicron particles will reduce the above mentioned risk impose by submicron particles to the health and environment. The term "filterable particles" as used herein refer to particles large enough such that inhaling organisms of living subjects in general, and those of human beings in particular, are capable of filtering the filterable particles, thereby preventing filterable particles from entering the lungs. Filterable particles also correspond to particles which can be captured by a mechanical filter.

The grouping of submicron particles brings to coagulation and to the formation of larger size particles and thereby decrease the number of submicron particles. There is therefore a need and it would be advantageous to have an apparatus that groups submicron particles into larger size particles, preferably filterable particles, and thereby decrease the number of submicron particles, for example, submicron particles departing from the exhaust system of an engine such as a Diesel engine.

A mathematical analysis concerning the grouping of submicron particles is found in D. Katoshevski, "Characteristics of Spray Grouping/ Non-Grouping Behavior", Aerosol and Air Quality Research, Vol. 6 (1), pp. 54-66, 2006. The analysis shows that when the velocity of the matter carrying the submicron particles, such as air, has a form of a moving wave, particles that are carried by such a wave may form groups under specific range of parameters. Such a wave exists in various systems such as in the case of particles in the sea-water where the wave is moving, described in Winter, C. at al, "Grouping Dynamics of Suspended Matter in Tidal Channels", J. Geophysical Research (JGR), Vol. 112: C08010, doi: 10.1029/2005JC003423, 2007.

WO 2007 101 246 A2 discloses an improved diesel particulate filter performance using sonic particle agglomeration wherein the exhaust gas is subjected to sonic waves to agglomerate the particles before entering the filter.

SUMMARY OF THE INVENTION

According to the teachings of the present invention, there is provided an exhaust pipe for a fuel burning engine including a hollow body, the body having an internal surface, an external surface, a first open end, a second open end and a longitudinal axis, wherein the internal surface is shaped to form standing cyclic wave geometry having at least 2 cycles.

When gas containing inhalable particles that enters the exhaust pipe through the first open end and flows out of the exhaust pipe through the second open end, a substantial amount of the irihalable particles are grouped to form filterable particles while flowing inside the exhaust pipe, whereby substantially increasing the quantity of filterable particles and substantially reducing the quantity of inhalable.

Typically, the longitudinal axis is disposed horizontally. But in variations of the present invention, the longitudinal axis is disposed vertically, wherein the second open end is elevated with respect to the first open end. In other variations of the present invention, the longitudinal axis is disposed diagonally, wherein the second open end is elevated with respect to the first open end.

Typically, the cross section of the exhaust pipe can be radial, polygonal, elliptical or other shapes.

The standing cyclic wave includes a narrow radial dimension $D_N$ and a wide radial dimension $D_W$, wherein the narrow radial dimension $D_N$ is substantially smaller than the wide radial dimension $D_W$. The ratio $D_W/D_N$ directly influences the grouping tendency of submicron particles.

The velocity field U inside the exhaust pipe is a standing wave velocity field, computed as follows:

$$U = U_a - U_b \cos(k x)\left(\sin(\omega t) + C\right),$$

where $U_a$ is the mean velocity, $C$ is constant, $U_b$ is the amplitude, $\omega$ is the angular frequency of the wave: $\omega = \dfrac{2\pi}{T}$

where $T$ is said wave period, and $k$ is said wave number: $k = \dfrac{2\pi}{L}$ where $L$ is said wave length, and wherein said constant $C$ is selected to achieve the maximal and minimal velocity values at $D_W$ and $D_N$, respectively.

The normalized velocity field $U^*$ is:

$$U^* = U_a^* - U_b^* \cos(x^*)\left(\sin(t^*) + C\right),$$

where the velocities are normalized with a characteristic velocity: $U_c$, where $U_c = \omega/k$; $x$ is normalized with $k$ and $t$ with $\omega$, and wherein the asterisk denotes dimensionless parameters, and wherein substantial grouping occurs when:

$$\frac{\left(U_a^* - 1\right)}{U_b^*} < 1.$$

## BRIEF DESCRIPTION OF THE DRAWINGS

The present invention will become fully understood from the detailed description given herein below and the accompanying drawings, which are given by way of illustration and example only and thus not limitative of the present invention, and wherein:

FIG. 1 is a graphical illustrates of an example of particle trajectories showing the formation of two groups;

FIG. 2 is a cross section illustration of an exhaust-pipe, according to embodiments of the present invention;

FIG. 3a shows an example of a circular cross section of the exhaust-pipe shown in Figure 2;

FIG. 3b shows an example of an elliptical cross section of the exhaust-pipe shown in Figure 2;

FIG. 4a graphically illustrates the grouping of particles as a result of flowing speed changes inside the exhaust-pipe shown in Figure 2;

FIG. 4b graphically illustrates the sinusoidal change in the particles flow speed over time, while flowing inside the exhaust-pipe shown in Figure 2;

FIG. 5 schematically illustrates an experimental setup having the exhaust of a Diesel engine operatively attached, in parallel, to a straight conventional steel pipe and to a cyclic exhaust pipe, according to embodiments of the present invention, as well as an enlargement of one cycle of the cyclic exhaust pipe;

FIG. 6 graphically illustrates the decrease of the amount inhaleable particles flowing out of the exhaust pipe, shown in Figure 5, compared with the inhalable particles flowing out of conventional straight pipe;

FIG. 7 graphically illustrates the effect of a cyclic exhaust pipe, according to embodiments of the present invention, on the particulates' size distribution;

FIG. 8 graphically illustrates the effect of the engine's load on the particulates' size distribution;

FIG. 9 graphically illustrates the effect of the engine's speed on the particulates' size distribution;

FIGs 10-12 are graphically illustrations of particles trajectories. Particle's grouping is well observed for $\beta<1$: as $\beta$ increases, the grouping tendency is weakened;

FIG. 13 graphically illustrates an approximated benchmark sketch for designing a converging pipe design, according to the present invention;

FIG. 14 schematically illustrates an experimental setup having the exhaust of a Diesel engine operatively attached, in parallel, to a straight conventional steel pipe and to a cyclic exhaust pipe, according to preferred variations of the present invention, whereas the cyclic exhaust pipe is disposed in vertical direction;

FIG. 15 graphically illustrates an example showing the changes in the mass fraction as a function of the particle's diameter while flowing inside the exhaust-pipe shown in Figure 14; and

FIG. 16 graphically illustrates an example case to show the characterization of grouping as a function of the EXHAUST angle.

DESCRIPTION OF THE PREFERRED EMBODIMENTS

Before explaining embodiments of the invention in detail, it is to be understood that the invention is not limited in its application to the details of construction and the arrangement of the components set forth in the host description or illustrated in the drawings. Unless otherwise defined, all technical and scientific terms used herein have the same meaning as commonly understood by one of ordinary skill in the art to which the invention belongs. The methods and examples provided herein are illustrative only and not intended to be limiting.

A principle intention of the present invention includes providing an exhaust-pipe for a fuel burning engine including a hollow body having an internal surface, an external surface, a first open end and a second open end. The internal surface is shaped to form a standing wave having at least 2 cycles. When gas containing inhalable particles enters the exhaust pipe through the first open end and flows out of the exhaust pipe through the second open end, a substantial amount of inhalable particles are grouped to form filterable particles, while flowing inside the exhaust pipe.

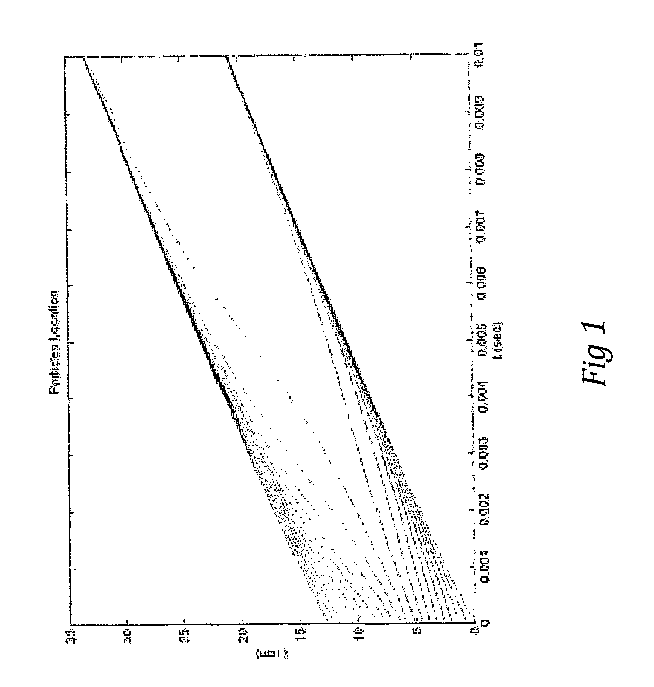

An aspect of the present invention is to provide a new concept of grouping in a pipe having a standing wave geometry, which defines a velocity standing wave. When a particle is moving in an oscillating gas-flow, the particle encounters areas where the velocity of the gas is faster or slower than the particle's own velocity. The time which takes for the particle to adjust to the local velocity change depends on the square of its diameter. Hence, some particles are affected more than others depending on the size of the particles. When a line of evenly distributed particles enters the pipe, a velocity wave is applied to the particles. Small delay time, that characterizes sub-micron particles, lead to the situation where a particle is accelerated or decelerated depending on the position of the particle in that wave (with respect to the local velocity level). This brings to the separation between two particles which were moving one after the other, as one is accelerated relative to the other. The separation between neighboring particles forms groups. A graphical example is illustrated in Figure 1, where particle trajectories are presented. At time=0 the particles are evenly distributed downstream on X, and as time passes, two groups are formed.

A standing velocity wave in a pipe is formed by periodically diameter variation downstream. According to the conservation of mass, in a smaller cross section higher velocity is obtained and vice versa. Hence, when the pipe diameter is converging and diverging periodically, a standing wave of velocity is obtained, wherein at any given time, the location of the maximum and minimum velocity values will be fixed along the pipe. Hence, in such a pipe, particles will experience acceleration and deceleration depending on their location.

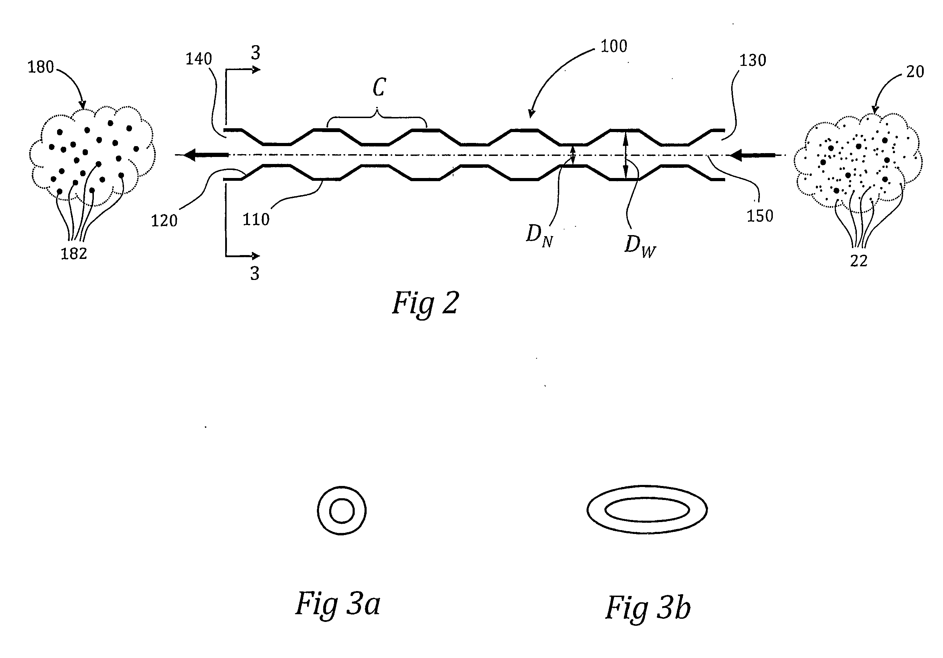

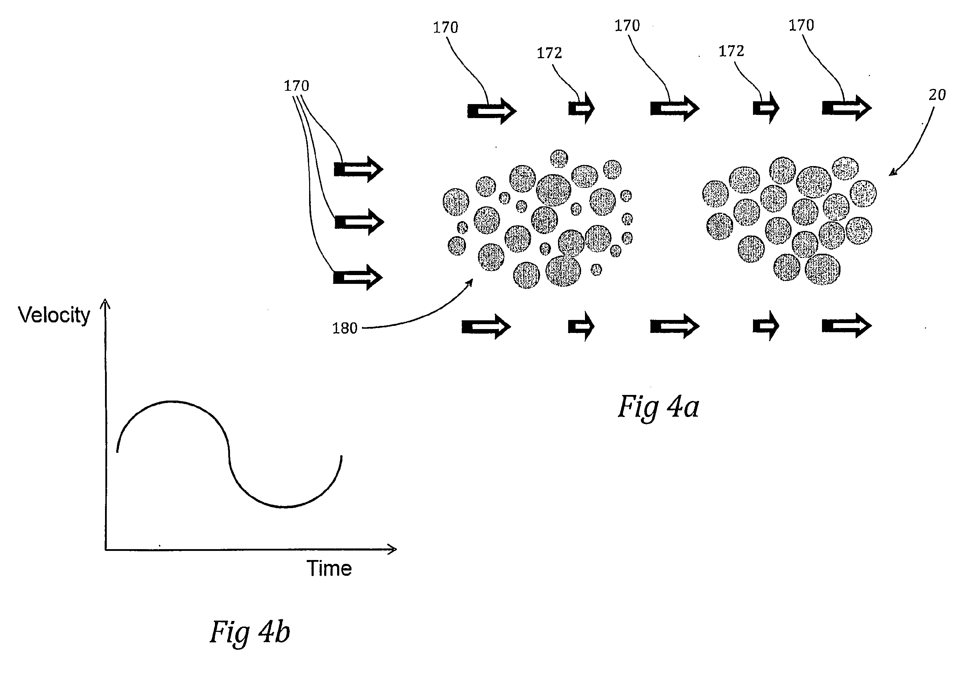

Reference is now made to Figure 2, which is a cross section illustration of an example exhaust-pipe **100**, according to embodiments of the present invention. Exhaust-pipe **100** includes a hollow body having internal surface **120**, external surface **110**, a first open end **130** and a second open end **140**. Internal surface **120** is shaped to form standing wave geometry having at least 2 cycles C. In the example shown in Figure 1, exhaust-pipe **100** includes 5 cycles C. Reference is also made to Figure 4a, which schematically illustrates the grouping of particles as a function of the particle's flowing speed changes inside exhaust-pipe **100**, and to Figure 4b, which graphically illustrates the sinusoidal change in the particles flow speed over time, while flowing inside exhaust-pipe **100**. The values of flow velocity are indicated by the length of the arrows. The particles are introduced from the inlet within an oscillating gas-flow. The gas-flow has also a downstream periodic variation. As the particles travel downstream, grouping takes place and inhalable particles **22** vanish at the expense of size-increase of filterable particles **182.**

When gas **20** containing inhalable particles **22** enters exhaust pipe **100** through first open end **130** and flows out of exhaust pipe **100** through second open end **140,** a substantial amount of inhalable particles **22** are grouped to form filterable particles **182.** It should be noted that some inhalable particles **22** are grouped with larger particles **182,** which are filterable to begin with. For example, using exhaust pipe **100** for a vehicle engine, leads to clustering of inhalable particles **22** moving in pipe **100.**

It should be noted that internal surface **120** is substantially symmetric with respect to longitudinal axis **150.** Preferably, with no limitations on other shapes, exhaust pipe **100** has a circular cross section, as shown in Figure 3a. Figure 3b shows an example of an elliptical cross section of exhaust pipe **100.** The narrow radial dimension $D_N$ of the cyclic wave is substantially smaller than the wide radial dimension $D_W$ of the wave, wherein the ratio $D_W/D_N$ directly influences the grouping tendency of submicron particles.

## Example

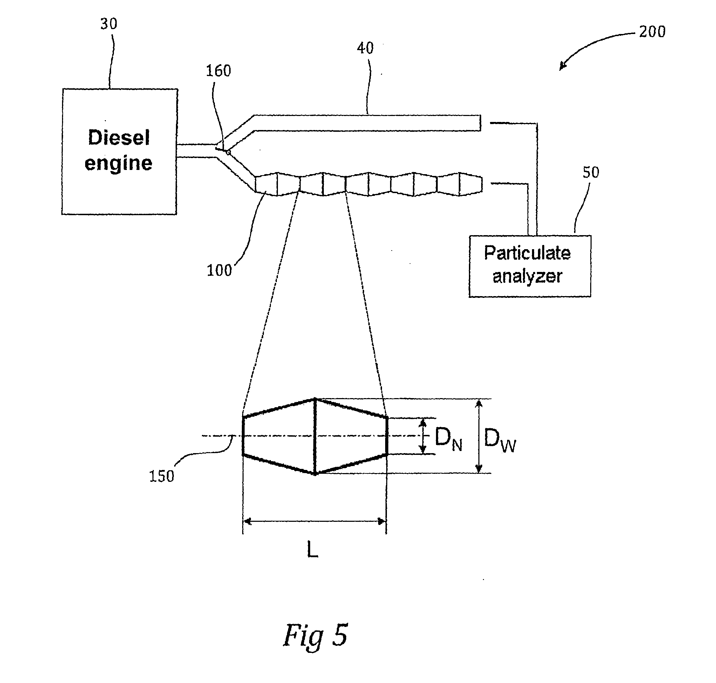

An experimental setup is shown in Figure 5. The exhaust of a Diesel engine **30** is operatively attached, in parallel, to two exhaust pipes: a) straight conventional steel pipe **40,** and b) exhaust pipe **100,** having 6 cycles **C.** Both pipes **40** and **100** are 80 cm long and have the same flow rate. At the outlet of each pipe measurement apparatus **50** are used to measure the size distribution of the particles. A particulate analyzer **50** is used to detect and measure particles in the *300nm* to *2μm* diameter range. Pipe selector **160** is used to select the exhaust pipe being under test.

The experimental engine specifications are as follows:

| Engine model | Mitsubishi S3L engine |
|---|---|
| Engine type | Three-cylinder, 4-stroke, compression-ignited, air-cooled engine |
| Cylinder stroke/bore | stroke/bore 78.5/78mm |
| Displacement volume | 1,125 cm$^3$ |
| Rated power: | 11.8kW at 1,500 rev/min |

In each test, the engine was operated under a set of operation conditions (engine speed and engine load). The engine was run under the specified conditions to attain steady-state operation, and then the exhaust gas was sampled first from the regular pipe and subsequently from the resonating pipe. Each sample was averaged during a time interval of 30 seconds.

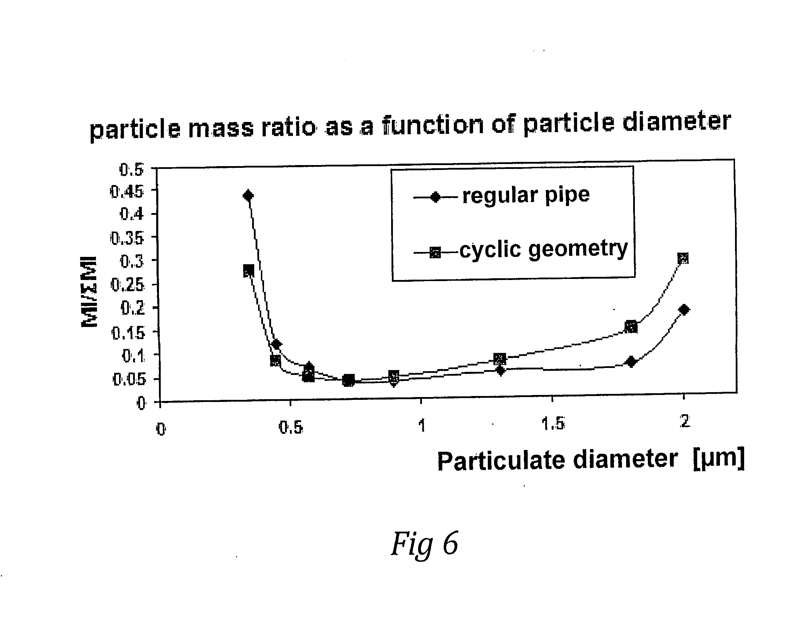

The results show a considerable decrease of the amount of the smaller particles at the expense of larger mass in the larger particle size-section. Figure 6 graphically illustrates the decrease of the amount inhalable particles flowing out of exhaust pipe **100** compared with the inhalable particles flowing out of straight pipe **40.**

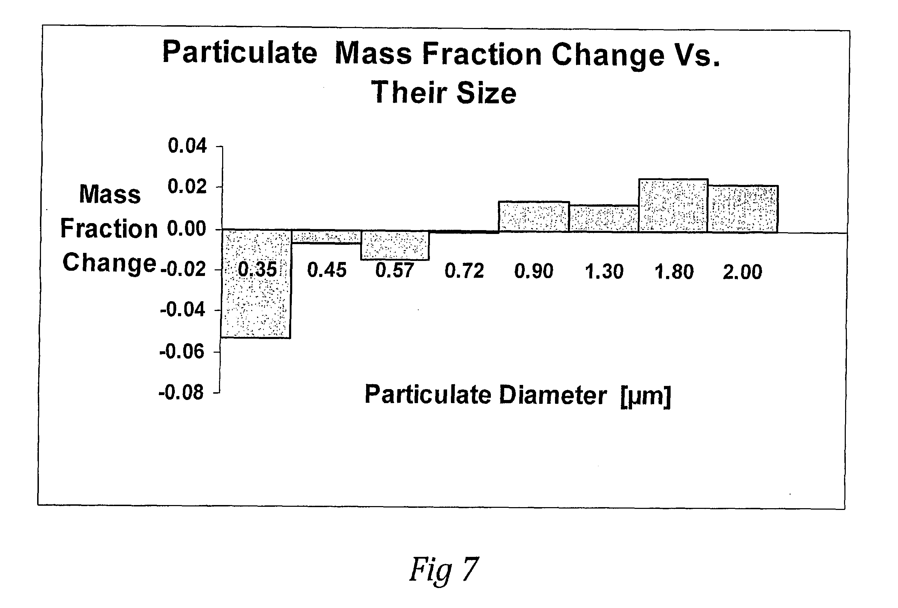

The effect of exhaust pipe **100** is clearly demonstrated in Figure 7, which is a graphically illustration of the effect of cyclic exhaust pipe **100,** according to embodiments of the present invention, on the particulates' size distribution. The example setup is as follows: engine speed=1,700 rpm, engine load=0 kW, exhaust pipe 100 aspect ratio, $D_W/D_N$=2.27, length to diameter ratio, L/D=2.0. Figure 7 shows how the size distribution of the exhaust particles is affected. The mass fraction change Δ*mass fraction* is defined as follows:

$$\Delta mass\_fraction = M_{\text{modified}} - M_{reg} \text{ ,}$$

Where $M_{modified}$ is the mass of larger particles 182, measured at the exhaust of cyclic exhaust pipe **100,** and $M_{reg}$ is the particles mass measured at the exhaust of regular pipe **40.**

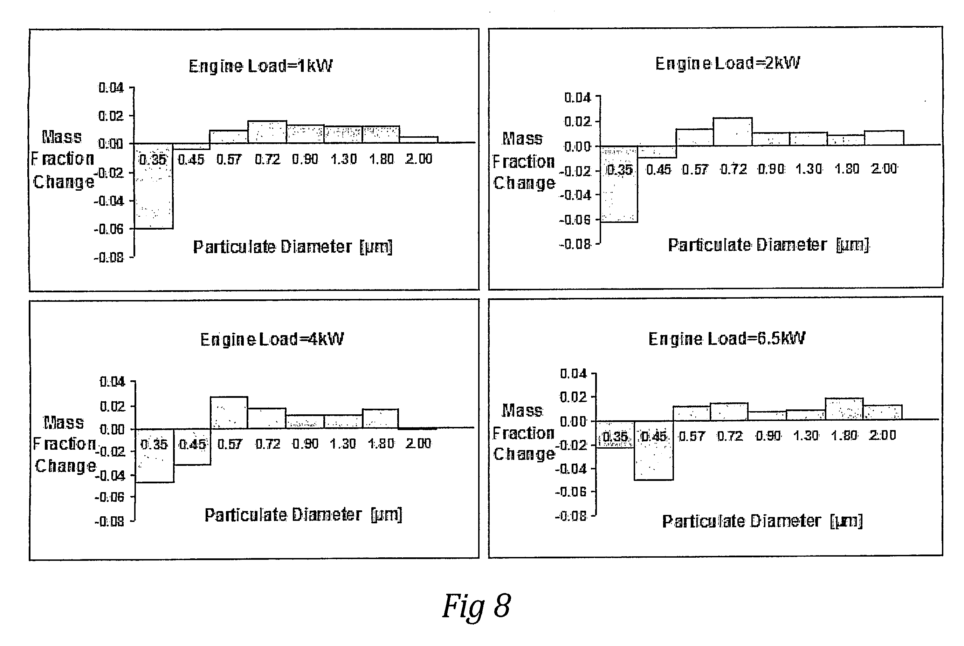

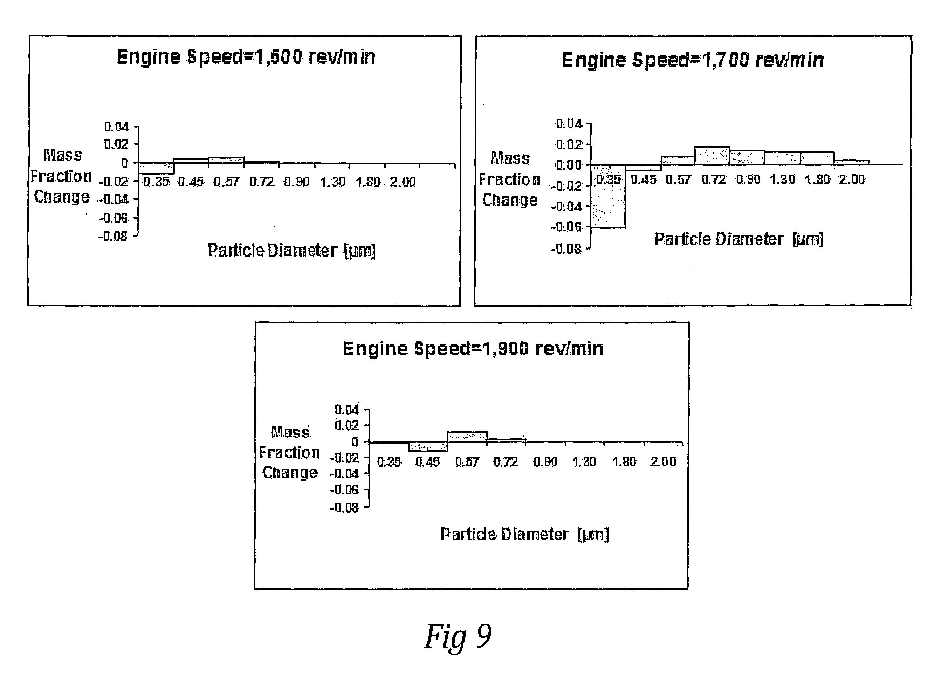

The apparent mass fraction of small particles **22** (in particular, in the sub-micron regime) has been reduced by some 2-6%, whilst the mass fraction of larger particles **182** was increased by some 1-2%. While particles **22** smaller than 0.3μm are not detectable by the particulate size analyzer used, mass conservation suggests that the remarkable increase in the mass fraction of the larger-size particles **182,** may confidently be attributed to the grouping (leading to agglomeration) of the undetected smaller-size particles **22.** Similar encouraging results were observed in a wide range of engine loads (Figure 8) and engine speeds (Figure 9).

The effect of the engine load at 1,700 rpm is depicted in Figure 8, which is a graphically illustration of the effect of the engine's load on the particulates' size distribution. Although, when the engine load increases, the total number of particles in any particle-size category increases as well, the effect of the alternating diameter pipe is fairly comparable.

Figure 9 shows the effect of the engine speed on the mass fraction change at an engine load of 2 kW. The results for the 1,500 rpm and 1,700 rpm are quite similar to those shown earlier. The results for the 1,900 rpm still show the migration of inhalable particles 22 towards larger-size particle 182, but the effect is rather mild. It should be noted that the total amount of the particles is low due to the low engine load, while the residence time of the particles in the exhaust pipe is relatively short due to the high exhaust gas velocity.

**Mathematical analysis of grouping in a converging pipe (standing wave velocity field)**

The converging pipe geometry induces particle grouping and coagulation leading to a shift in particle size distribution, which increases the mass/number of the larger particles at the expense of the reduction in the amount of smaller particles.

The velocity field $U$ inside pipe **100** is a standing wave velocity field with modification:

$$U = U_a - U_b \cos(k\,x)\cdot\big(\sin(\omega\,t) + C\big), \qquad (1)$$

where $U_a$ is the mean velocity, **C** is constant, $U_b$ is the amplitude, $\omega$ is the angular frequency of the wave ($\omega = \dfrac{2\pi}{T}$

where **T** is the wave period) and $k$ is the wave number $T$ ($k = \dfrac{2\pi}{L}$ where **L** is the wave length). $L$

The constant $C$ is introduced in order to achieve the maximal and minimal velocity values at the areas of biggest and smallest diameter, correspondingly, and $C>1$ to fulfill that condition.

The equation of particle motion in a dimensional form is:

$$\ddot{x} = \frac{1}{\tau_p}\big(U - \dot{x}\big) \qquad (2)$$

where $x$ is the particle location and $\tau_p = \dfrac{1}{18}\dfrac{\rho_p D_p^2}{\mu}$ (Katoshevski, D., Dodin, x Z., Ziskind, G., 2005, "Aerosol clustering in oscillating flows: mathematical analysis", Atomization and Sprays 15, 401-412), $\rho_p$ is the particle density, $D_p$ is the particle diameter, and $\mu$ is the dynamic viscosity of the host gas.

Substituting the velocity field (Eq. 1) into the particle equation of motion (Eq. 2) leads to the following dimensional equation:

$$\ddot{x} + \frac{1}{\tau_p}\dot{x} + \frac{U_b}{\tau_p}\cos(kx)\big(\sin(\omega t) + C\big) = \frac{U_a}{\tau_p}, \qquad (3)$$

The normalized velocity field is:

$$U^* = U^*_a - U^*_b \cos( x^* )\left(\sin( t^* ) + C \right), \qquad (4)$$

where the velocities are normalized with a characteristic velocity: $U_c$, where $U_c = \omega/k$. x is normalized with $k$ and $t$ with $\omega$ (the asterisk denotes dimensionless parameters).

The equation of particle motion in dimensionless form is:

$$\ddot{x}^* = \frac{1}{St}\left(U^* - \dot{x}^*\right) \qquad (5)$$

where $x^*$ is the particle location and $St = \frac{1}{18} \dfrac{\rho_p\, \omega\, D_p^2}{\mu}$ is the Stokes number.

Inserting the dimensionless velocity field into the particle equation of motion leads to the following equation:

$$\ddot{x}^* + \frac{1}{St}\dot{x}^* + \frac{U^*_b}{St}\cos( x^* )\left(\sin( t^* ) + C \right) = \frac{U^*_a}{St}, \qquad (6)$$

Introducing:

$$\theta = x^* - t^*$$

leads to:

$$\ddot{\theta} + \frac{1}{St}\dot{\theta} + \frac{U^*_b}{St}\cos( \theta + t^* )(\sin( t^* ) + C) = \frac{U^*_a - 1}{St} \qquad (7)$$

Introducing:

$$t^* = \frac{\tau}{\sqrt{U^*_b / St}}$$

leads to:

$$\ddot{\theta} + \dot{\theta} + \alpha \cos(\theta + t^*)\left[\sin(t^*) + C\right] = \beta, \qquad (8)$$

where

$$\alpha = \frac{1}{\sqrt{St\, U^*_b}} \qquad (9)$$

and

$$\beta = \frac{\left(U_a^* - 1\right)}{U_b^*}.$$  (10)

In order to ensure grouping we need to maintain $\beta<1$.

There are basically two modes of grouping, where one is denoted as "stable grouping" and the other is denoted as "non-stable grouping". In the stable mode, particles are forming groups that do not brake further downstream. In the non-stable mode, groups may breakup and some of the particles do not group at all. In order to ensure a high degree of grouping or stable grouping, the condition of $\beta<1$ has to be substantially fulfilled. Smaller particles (typically smaller than $80\mu$ but larger than a molecule), having a diameter close to zero, have a higher tendency to group, that is smaller Stokes number. However, to ensure grouping the condition $\beta<1$ should be fulfilled, although grouping in the standing wave configuration may occur also at $\beta>1$.

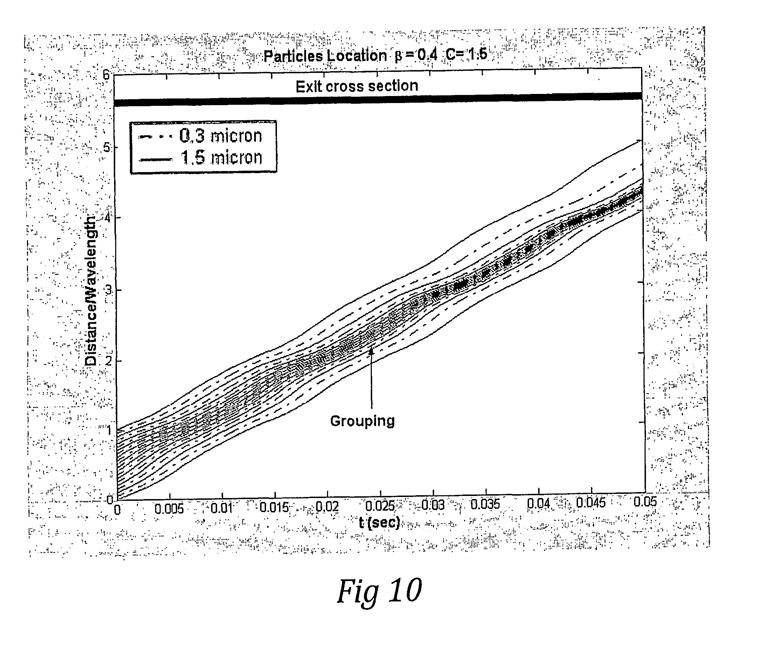

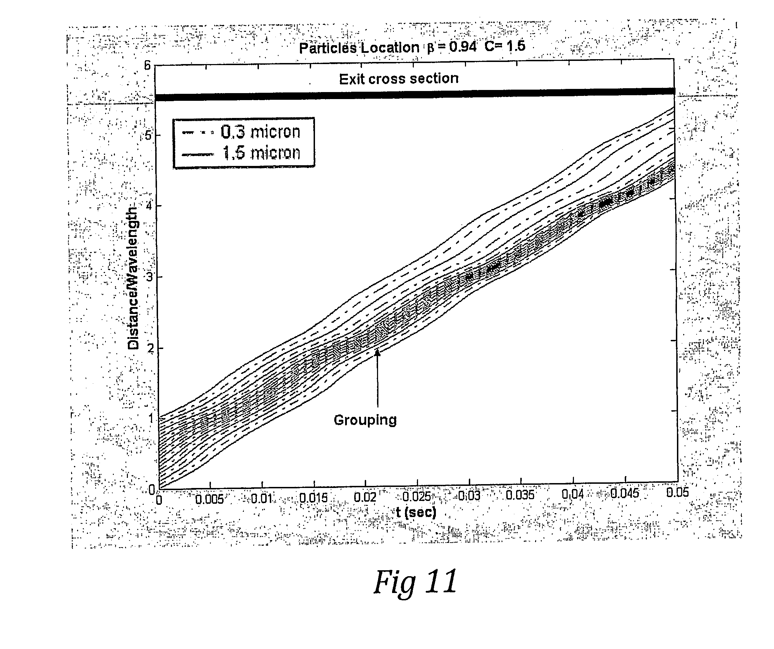

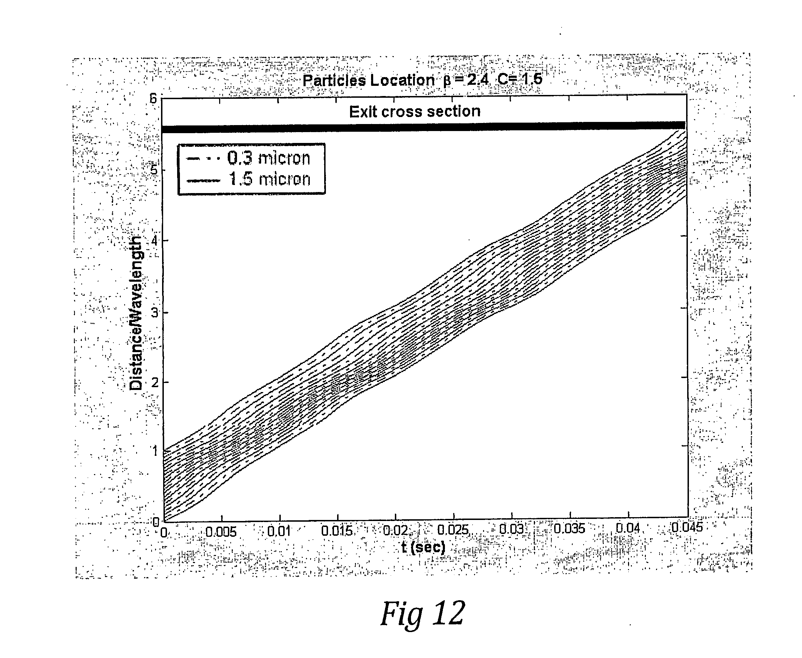

Figures 10-12 demonstrates calculations for particle trajectories as measured on example system **200** shown in Figure 5. Three sets of calculations are made with the same value of $C$ ($C$=1.5) but with different $\beta$ values ($\beta$=0.4, 0.94, 2.4). Particle diameters are set to $0.3\mu$m and $1.5\mu$m, sizes which are relevant to the experimental results described in Figures 10-12. Particles groups after approximately 2 cycles are shown in Figures 10-12. Grouping is denoted by the dense area of Figure 10 where the trajectories of the particles come closer together. As $\beta$ is increased from 0.4 to 0.94 the tendency for grouping is decreased as shown in Figure 11 (the lines are less dense) and for a larger value of $\beta$, 2.4, as shown in Figure 12, the situation may be denoted as weak grouping or non-grouping. This coincides with the results mentioned earlier, obtained for the moving wave scenario, that is, $\beta$ should be less than unity to ensure a significant degree of grouping. It is important to note that the model does not include a "sticking" factor, and, as soot particles do have some stickiness characteristics, practically, a significant coagulation takes place after 2 wave lengths and continue downstream exhaust-pipe **100,** having standing wave geometry.

Following the above condition as a design tool for converging pipe **100,** $\beta$ is defined with the following parameters of converging pipe **100:**

| $A_{max}$ | Maximum area of the pipe |
| --- | --- |
| $A_{min}$ | Minimum area of the pipe |
| f | Frequency of pulsating flow at inlet |
| L | Distance between two nodes |
| N | Engine speed in rev/min |
| n | Number of cylinders |
| Q | Volumetric flow rate |
| R | Area ratio ($A_{max}/A_{min}$) |
| $V_d$ | Cylinder displacement volume (for one cylinder) |
| X | Engine revolutions per working stroke (=2 for 4 stroke engine) |

Let us define, for convenience, $T = \sin(\omega t) + C$. Applying mass conservation between maximum and minimum locations and assuming that the density of the gas is constant.

$$\frac{U_a + U_b T}{U_a - U_b T} = \frac{A\max}{A\min}$$  (11)

Inserting to $\beta$ and using dimensional expressions:

$$\beta = \frac{U_a - \dfrac{\omega}{k}}{U_b} = 2\frac{U_a - \dfrac{\omega}{k}}{\dfrac{U_a}{T}\dfrac{(A\max - A\min)}{(A\min + A\max)}} \qquad (12)$$

Using the relations:

$$Q = \frac{N \cdot n}{60 \cdot x} V_d \quad , \quad f = \frac{N \cdot n}{60 \cdot x}$$

we can write:

$$\frac{\omega}{k} = fL = \frac{Q}{V_d} L \qquad (13)$$

Inserting that to $\beta$:

$$\beta = T\left(1 - 2\frac{(V^* - 1)}{(R - 1)}\right) \qquad (14)$$

where $T$ is a function of time, and in order to evaluate its value we should relate time to the grouping occurrence. This is enabled by using the mathematical model as reflected in Figures 10-12.

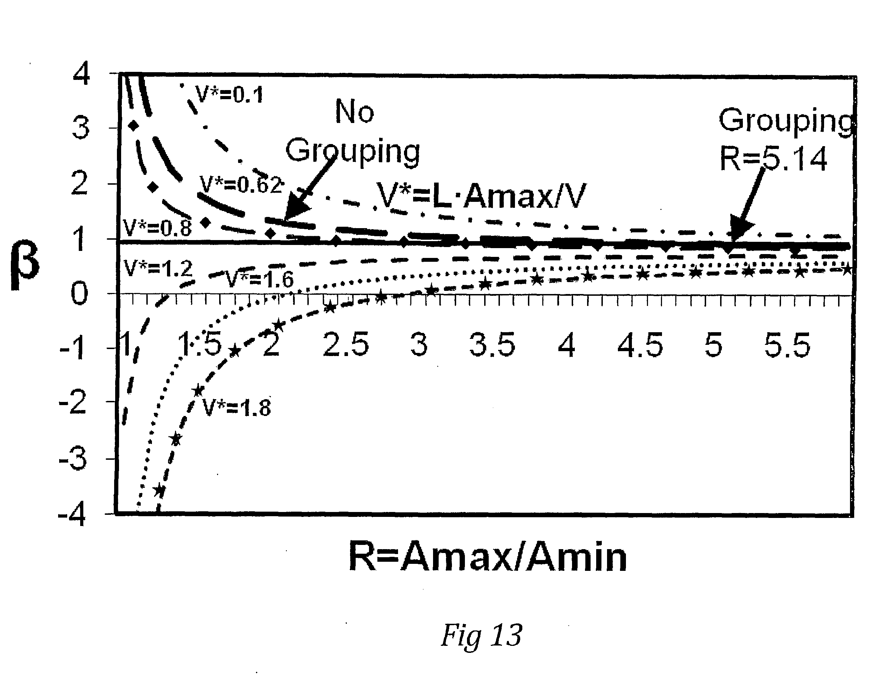

The characteristic grouping time is related to the value of $\beta$, which facilitates a practical design tool of the exhaust pipe, as described in Figure 13, which is a benchmark sketch for design. That sketch enables to evaluate the pipe-geometry as a function of engine characteristics. For optimal performance it is suggested that $0 < \beta < 1$. For example, the value of the volume ratio $V^*$ for the example system **200,** shown in Figure 5, is 0.62, and the cross section area relation is $R = 5.14$. For the case of $\beta = 0.94$, described in Figure 11, the corresponding value of the function T (Eq. 14) leads to the time value of 0.025 sec. This in turn corresponds well to the grouping occurrence as reflected in Figure 11. Hence, fixing the correct position of the curve for $V^* = 0.62$ in that sketch.

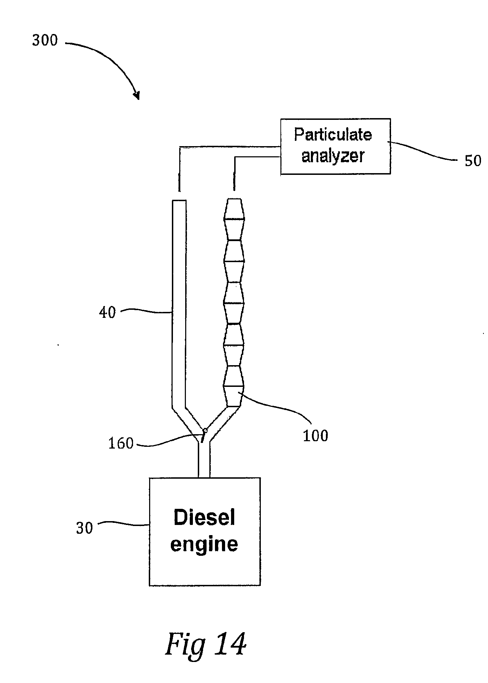

In preferred variations of the present invention, exhaust pipe **100** is operatively disposed vertically, whereas the internal flow of gas is generally upwardly. Reference is made to Figure 14, which schematically illustrates an experimental setup **300** having the exhaust of a Diesel engine **30** operatively attached, in parallel, to a straight conventional steel pipe **40** and to a cyclic exhaust pipe **100,** according to preferred variations of the present invention, whereas cyclic exhaust pipe **100** is disposed in vertical direction. Both pipes **40** and **100** are 80 cm long and have the same flow rate. At the outlet of each pipe measurement apparatus **50** are used to measure the size distribution of the particles. Hence, disposing cyclic exhaust pipe **100** is disposed in vertical direction, wherein a first open end **130** is pointing upwardly.

The results show a considerable decrease of the amount of the smaller particles at the expense of larger mass in the larger particle size-section, compared with setup of system **200,** shown in Figure 5, operated under substantially the same conditions.

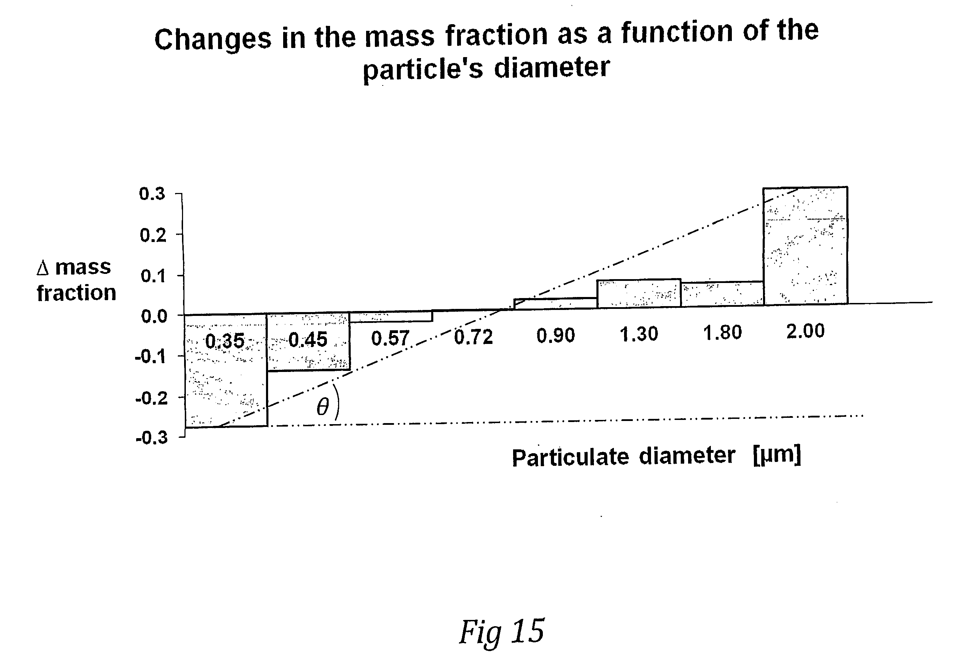

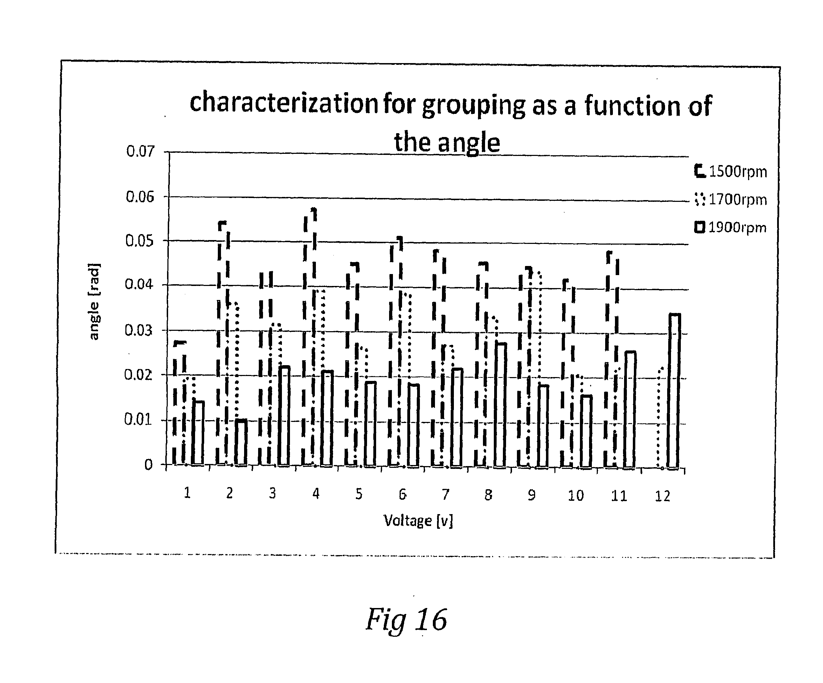

Figure 15 graphically illustrates an example showing the changes in the mass fraction as a function of the particle's diameter while flowing inside the exhaust-pipe **100** being part of system **300,** wherein the engine operates at 1500 rpm and with a 6kW load. It should be noted that the grouping rate can by characterized by the slope denoted by angle $\theta$. The larger angle $\theta$ is, the higher the grouping rate is. Figure 16 graphically illustrates an example case to show the characterization of grouping as a function of angle $\theta$, at various engine speeds.

In other variations of the present invention, exhaust pipe **100** is operatively disposed diagonally, whereas the internal flow of gas is generally upwardly.

It should be noted that the resistance pressure inside a conventional exhaust pipe 40 and compatible exhaust pipe **100** are substantially the same.

The invention being thus described in terms of embodiments and examples, it will be obvious that the same may be varied in many ways.

**Claims**

1. An exhaust pipe (100) for a fuel burning engine comprising a hollow body, said body having an internal surface (120), an external surface (110), a first open end (130), a second open end (140) and a longitudinal axis (150), wherein gas (20) containing inhalable particles (22) that enters the exhaust pipe (100) through said first open end (130) and flows out of the exhaust pipe (100) through said second open end (140), wherein an amount of said inhalable particles (22) are grouped to form filterable particles (182) while flowing inside the exhaust pipe (100), **characterized in that** said internal surface (120) is shaped to form standing cyclic wave geometry having at least 2 cycles (c).

2. The exhaust pipe (100) of claim 1, wherein said longitudinal axis (150) is disposed horizontally.

3. The exhaust pipe (100) of claim 1, wherein said longitudinal axis (150) is disposed vertically, wherein said second open end is elevated with respect to said first open end.

4. The exhaust pipe (100) of claim 1, wherein said longitudinal axis (150) is disposed diagonally, wherein said second open end is elevated with respect to said first open end.

5. The exhaust pipe (100) of claim 1, wherein said standing cyclic wave includes a narrow radial dimension $D_N$ and a wide radial dimension $D_W$, wherein said narrow radial dimension $D_N$ is smaller than said wide radial dimension $D_W$.

6. The exhaust pipe (100) of claim 5, wherein the ratio $D_W/D_N$ directly influences the grouping tendency of submicron particles.

7. The exhaust pipe (100) of claim 1, wherein the cross section of the exhaust pipe (100) can be radial, polygonal, elliptical or other shapes.

8. The exhaust pipe (100) of claim 1, wherein the velocity field U inside the exhaust pipe (100) is a standing wave velocity field:

$$U = U_a - U_b \cos(kx)(\sin(\omega t) + C),$$

where $U_a$ is the mean velocity, C is constant, $U_b$ is the amplitude, $\omega$ is the angular frequency of the wave: $\omega$ where

T is said wave period, and k is said wave number: $k = \dfrac{2\pi}{L}$ where L is said wave length; and wherein said constant

C is selected to achieve the maximal and minimal velocity values at $D_W$ and $D_N$, respectively.

9. The exhaust pipe (100) of claim 8, wherein the normalized velocity field $U^*$ is:

$$U^* = U_a^* - U_b^* \cos(x^*)(\sin(t^*) + C),$$

where the velocities are normalized with a characteristic velocity: $U_c$, where $U_c = \omega/k$; x is normalized with k and t with $\omega$, and wherein the asterisk denotes dimensionless parameters; and wherein grouping occurs when:

$$\frac{(U_a^* - 1)}{U_b^*} < 1.$$

**Patentansprüche**

1. Abgasleitung (100) für einen Verbrennungsmotor mit einem hohlen Körper, wobei der Körper eine innere Oberfläche (120), eine äußere Oberfläche (110), ein erstes offenes Ende (130), ein zweite offenes Ende (140) und eine Längsachse (150) aufweist, wobei das Gas (20) inhalierbare Partikel (22) aufweist, die in die Abgasleitung (100) durch das erste offene Ende (130) eintreten und aus der Abgasleitung (100) durch das zweite offene Ende (140) ausströmen, wobei eine Menge der inhalierbaren Partikel (22) gruppiert ist, um filterbare Partikel (182) zu bilden, während sie im Innern der Abgasleitung (100) strömen, **dadurch gekennzeichnet, dass** die innere Oberfläche (120) so geformt ist, dass sie eine Geometrie einer stehenden zyklischen Welle mit zumindest zwei Zyklen (c) bildet.

2. Abgasleitung (100) nach Anspruch 1, wobei die Längsachse (150) horizontal angeordnet ist.

3. Abgasleitung (100) nach Anspruch 1, wobei die Längsachse (150) vertikal angeordnet ist, wobei das zweite offene Ende im Verhältnis zum ersten offenen Ende erhöht ist.

4. Abgasleitung (100) nach Anspruch 1, wobei die Längsachse (150) diagonal angeordnet ist, wobei das zweite offene Ende im Verhältnis zum ersten offenen Ende erhöht ist.

5. Abgasleitung (100) nach Anspruch 1, wobei die stehende zyklische Welle eine schmale radiale Abmessung $D_N$ und eine breite radiale Abmessung $D_W$ aufweist, wobei die schmale radiale Abmessung $D_N$ kleiner ist als die breite radiale Abmessung $D_W$.

6. Abgasleitung (100) nach Anspruch 5, wobei das Verhältnis $D_W/D_N$ direkt die Gruppierungstendenz von Teilchen von weniger als einem Mikrometer beeinflusst.

7. Abgasleitung (100) nach Anspruch 1, wobei der Querschnitt der Abgasleitung (100) radial, polygonal, elliptisch sein kann oder andere Formen aufweisen kann.

8. Abgasleitung (100) nach Anspruch 1, wobei das Geschwindigkeitsfeld U im Innern der Abgasleitung (100) ein Geschwindigkeitsfeld einer stehenden Welle ist:

$$U = U_a - U_b \cos(kx)(\sin(\omega t) + C),$$

wobei $U_a$ die mittlere Geschwindigkeit, C eine Konstante, $U_b$ die Amplitude, $\omega$ die Winkelfrequenz der Welle ist:

$$\omega = \frac{2\pi}{T},$$

wobei T die Wellenperiode und k die Wellenzahl ist: $k = \frac{2\pi}{L}$, wobei L die Wellenlänge ist und die Konstante C so gewählt ist, dass der maximale und minimale Geschwindigkeitswert bei $D_W$ bzw. $D_N$ erreicht wird.

9. Abgasleitung (100) nach Anspruch 8, wobei das normierte Geschwindigkeitsfeld $U^*$ ist:

$$U^* = U_a^* - U_b^* \cos(x^*)(\sin(t^*) + C),$$

wobei die Geschwindigkeiten mit einer charakteristischen Geschwindigkeit normiert sind: $U_c$, wobei $U_c = \omega/k$; wobei x mit k und t mit $\omega$ normiert ist, der Stern dimensionslose Parameter bezeichnet und die Gruppierung auftritt, wenn:

$$\frac{(U_a^{\cdot} - 1)}{U_b^{\cdot}} < 1.$$

**Revendications**

1. Tuyau d'échappement (100) pour un moteur à combustion comprenant un corps creux, ledit corps comportant une surface interne (120), une surface externe (110), une première extrémité ouverte (130), une deuxième extrémité ouverte (140) et un axe longitudinal (150),
dans lequel un gaz (20) contenant des particules inhalables (22) entre dans le tuyau d'échappement (100) à travers ladite première extrémité ouverte (130) et sort du tuyau d'échappement (100) à travers ladite deuxième extrémité ouverte (140), dans lequel une quantité desdites particules inhalables (22) sont groupées pour former des particules filtrables (182) tandis qu'elles circulent à l'intérieur du tuyau d'échappement (100), **caractérisé en ce que** ladite surface interne (120) est formée pour former une géométrie d'onde cyclique stationnaire ayant au moins 2 cycles (c).

2. Tuyau d'échappement (100) selon la revendication 1, dans lequel ledit axe longitudinal (150) est disposé horizontalement.

3. Tuyau d'échappement (100) selon la revendication 1, dans lequel ledit axe longitudinal (150) est disposé verticalement, dans lequel ladite deuxième extrémité ouverte est élevée par rapport à ladite première extrémité ouverte.

4. Tuyau d'échappement (100) selon la revendication 1, dans lequel ledit axe longitudinal (150) est disposé en diagonale, dans lequel ladite deuxième extrémité ouverte est élevée par rapport à ladite première extrémité ouverte.

5. Tuyau d'échappement (100) selon la revendication 1, dans lequel ladite onde cyclique stationnaire comprend une dimension radiale étroite $D_N$ et une dimension radiale large $D_W$, dans lequel ladite dimension radiale étroite $D_N$ est plus petite que ladite dimension radiale large $D_W$.

6. Tuyau d'échappement (100) selon la revendication 5, dans lequel le rapport $D_W/D_N$ influence directement la tendance de groupement de particules inférieures au micron.

7. Tuyau d'échappement (100) selon la revendication 1, dans lequel la section du tuyau d'échappement (100) peut être radiale, polygonale, elliptique ou d'autres formes.

8. Tuyau d'échappement (100) selon la revendication 1, dans lequel le champ de vitesse U à l'intérieur du tuyau d'échappement (100) est un champ de vitesse d'onde stationnaire :

$$U = U_a - U_b \cos(k x)(\sin(\omega t) + C),$$

où $U_a$ est la vitesse moyenne, C est une constante, $U_b$ est l'amplitude, $\omega$ est la fréquence angulaire de l'onde :

$$\omega = \frac{2\pi}{T}$$ où T est ladite période d'onde, et k est ledit nombre d'onde : $L$ où L est ladite longueur d'onde ; et dans lequel ladite constante C est sélectionnée pour atteindre les valeurs de vitesse maximale et minimale à $D_W$ et $D_N$, respectivement.

9. Tuyau d'échappement (100) selon la revendication 8, dans lequel le champ de vitesse normalisé $U^*$ est :

$$U^{\cdot} = U_a^{\cdot} - U_b^{\cdot} \cos(x^{\cdot})(\sin(t^{\cdot}) + C),$$

où les vitesses sont normalisées avec une vitesse caractéristique : $U_c$, où $U_c = \omega/k$ ; x est normalisé avec k et t avec $\omega$, et dans lequel l'astérisque indique des paramètres sans dimension ; et dans lequel un groupement a lieu lorsque :

$$\frac{\left(U_a^* - 1\right)}{U_b^*} < 1.$$

*Fig 1*

*Fig 2*

*Fig 3a*          *Fig 3b*

EP 2 414 645 B1

Fig 4a

Fig 4b

*Fig 5*

EP 2 414 645 B1

particle mass ratio as a function of particle diameter

Fig 6

## Particulate Mass Fraction Change Vs. Their Size

*Fig 7*

Fig 8

*Fig 9*

*Fig 10*

*Fig 11*

EP 2 414 645 B1

*Fig 12*

EP 2 414 645 B1

*Fig 13*

EP 2 414 645 B1

*Fig 14*

## Changes in the mass fraction as a function of the particle's diameter

$\Delta$ mass fraction — y-axis (0.3, 0.2, 0.1, 0.0, -0.1, -0.2, -0.3)

Bars labeled: 0.35, 0.45, 0.57, 0.72, 0.90, 1.30, 1.80, 2.00

$\theta$

Particulate diameter [µm]

*Fig 15*

EP 2 414 645 B1

*Fig 16*

EP 2 414 645 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61164477 B

- WO 2007101246 A2

### Non-patent literature cited in the description

- **D. KATOSHEVSKI.** Characteristics of Spray Grouping/ Non-Grouping Behavior. *Aerosol and Air Quality Research,* 2006, vol. 6 (1), 54-66
- **WINTER, C.** Grouping Dynamics of Suspended Matter in Tidal Channels. *J. Geophysical Research,* 2007, vol. 112, C08010

- **KATOSHEVSKI, D. ; DODIN, X Z. ; ZISKIND, G.** Aerosol clustering in oscillating flows: mathematical analysis. *Atomization and Sprays,* 2005, vol. 15, 401-412